# EUROPÄISCHE PATENTANMELDUNG

(11) **EP 1 775 201 A2**
(43) Veröffentlichungstag der Anmeldung: **18.04.2007**
(21) Anmeldenummer: 05023149.7
(22) Anmeldetag: 24.10.2005
(51) Int. Cl.: B62D 29/04

(54) **Verbundbauteil, insbesondere Fahrzeugpaneel**

(30) Priorität: 17.10.2005 EP 05022620
(71) Anmelder: ArvinMeritor GmbH, 63128 Dietzenbach (DE)
(72) Erfinder: Batke, Harald, 38539 Müden/Aller (DE); Beck, Herbert, 38302 Wolfenbüttel (DE); Behmer, Ralf, 38118 Braunschweig (DE); Hardel, Sven, 29386 Wettendorf (DE); Langhoff, Hans-Joachim, 38518 Gifhorn (DE); Ludwig, Matthias, 38159 Vechelde (DE); Melzian, Fred, 38486 Kusey (DE); Niebuhr, Frank, 38518 Wilsche (DE); Niesner, Tobias, 38518 Gifhorn (DE); Staciwa, Volker, 29399 Wahrenholz/OT Weissenberge (DE)
(74) Vertreter: Kitzhofer, Thomas

(57) **Zusammenfassung**

Ein Verbundbauteil, insbesondere ein Fährzeugpaneel wie ein Karosserieanbauteil, ein verschiebbarer Glasdeckel oder eine Innenraumverkleidung, hat eine geschäumte Kunststoffschicht (14) und einen langgestreckten, extrudierten Kunststoffkörper (16), wobei der die Stabilität des Fahrzeugkarosserieanbauteils erhöhende Kunststoffkörper (16) mit Fasern (18) verstärkt und wenigstens abschnittsweise in die Kunststoffschicht (14) eingebettet ist.

## Beschreibung

Die Erfindung betrifft ein Verbundbauteil, insbesondere ein Fahrzeugpaneel.

Fahrzeugpaneele sind z.B. großflächige Innenraumverkleidungsteile und großflächige Karosserieanbauteile. Karosserieanbauteile für ein Fahrzeug wiederum sind solche Teile, die an der Fahrzeugkarosserie angebracht werden und die Außenhaut des Fahrzeugs im fertig montiertem Zustand wenigstens abschnittsweise definieren und von außen sichtbar sind. Karosserieanbauteile können Klappen (Türen, Deckel), Stoßfänger oder Fahrzeugdachpaneele (Dachmodule oder Deckel für Dachöffnungssysteme) sein.

Zur Verstärkung geschäumter Fahrzeugkarosserieanbauteile werden üblicherweise längliche Stahleinleger in Form von Hohlprofilen in eine Kunststoffschicht eingebettet.

Nach dem Schäumvorgang und dem Abkühlen werden Anbauteile oft manuell ausgerichtet, denn der durch den heißen Kunststoff aufgeheizte Stahl zieht sich wieder zusammen und sorgt für eine andere Krümmung des Anbauteils. Alternativ werden die Stahleinleger vorgespannt umschäumt, was eine sehr feine Abstimmung erfordert, damit das abgekühlte Anbauteil ohne Richten gleich die gewünschte Form und Krümmung besitzt. Besonders aufwendig ist die Produktion von Glasdeckeln für Schiebe- oder Spoilerdächer, die am Rand rückseitig hinterschäumt werden.

Der Erfindung liegt die Aufgabe zugrunde, ein einfach herzustellendes, großflächiges (d.h. geringe Dicke im Vergleich zur sichtbaren Außenseite) Verbundbauteil, insbesondere Fahrzeugpaneel zu schaffen, das eine sehr gute Qualität aufweist und u.a. auch sehr stabil ist.

Zu diesem Zweck sieht die Erfindung ein Verbundbauteil, insbesondere ein Fahrzeugpaneel, vor, mit einer geschäumten Kunststoffschicht und einem langgestreckten, extrudierten, vorgefertigten Kunststoffkörper, wobei der die Stabilität des Verbundbauteils erhöhende Kunststoffkörper mit Fasern (Kohlefasern oder Glasfasern) verstärkt und wenigstens abschnittsweise in die Kunststoffschicht eingebettet ist. Die mit der Erfindung erzielten Vorteile bestehen insbesondere darin, daß das unterschiedliche Ausdehnungs- und Schwindverhalten der Kunststoffschicht und des Kunststoffkörpers vermindert wird, da die Kunststoffschicht und der Kunststoffkörper einen nahezu gleichen Wärmeausdehnungskoeffizienten haben. Dadurch tritt ferner bei hohen Temperaturen keine Wölbung des Fahrzeugkarosserieanbauteils wie bei bisherigen Stahleinlegern aufgrund des Bimetalleffekts auf, und Beeinträchtigungen der Oberflächenqualität werden verhindert. Der mit Fasern verstärkte Kunststoffkörper erhöht die Stabilität des Fahrzeugkarosserieanbauteils erheblich und sorgt im Vergleich zu einem Stahleinleger für eine Gewichtsreduzierung des Fahrzeugkarosserieanbauteils.

Der Vorteil der Erfindung kommt insbesondere bei Bauteilen mit einer hinterschäumten Außenhaut aus Glas zum Tragen, denn durch Verwendung eines Kunststoffkörpers mit einem Glasfaseranteil von mehr als 30 Gew.-% werden die Wärmeausdehnungskoeffizienten der Außenhaut und des Verstärkungsteils angeglichen.

Vorzugsweise ist der Kunststoffkörper vollständig in der Kunststoffschicht eingebettet. Der Kunststoffkörper ist also allseitig von der Kunststoffschicht umgeben.

Bevorzugt ist kein langgestrecktes Stahlverstärkungsprofil zur Erhöhung der Steifigkeit in der Kunststoffschicht im Bereich des Kunststoffkörpers vorgesehen. Diese Aufgabe übernimmt nun der mit Fasern verstärkte Kunststoffkörper in Kombination mit der Kunststoffschicht.

Die Fasern haben vorzugsweise eine Länge von wenigstens 200 mm, so daß eine große Zugfestigkeit erreicht wird.

Gemäß der bevorzugten Ausführungsform verlaufen die Fasern über die gesamte Länge des Kunststoffkörpers, d.h. zu entgegengesetzten Stirnseiten.

Die Fasern sind z.B. als Stränge ausgeführt, die sich nahezu parallel zueinander erstrecken. In Stränge angeordnete Fasern erhöhen die Stabilität in Zugrichtung.

Alternativ können die Fasern auch geflochten sein.

Die Fasern erstrecken sich insbesondere im wesentlichen parallel zu einem Außenrand des Verbundbauteils, wodurch sich ein langgestrecktes, zugfestes und biegesteifes Verstärkungsteil ergibt.

Das Verbundbauteil weist vorzugsweise eine Außenhaut auf, wobei die Außenhaut von der Kunststoffschicht hinterschäumt ist. Als Außenhaut kann eine rückseitig hinterschäumte Kunststoffolie, insbesondere eine zweischichtige durchgefärbte Koextrusionsfolie dienen und/oder ein plattenförmiges, separates Dachteil, z.B. ein Glaspaneel. Bei einem Innenverkleidungsteil wird üblicherweise ein Textil, ein Leder oder eine bedruckte Folie als Außenhaut eingesetzt.

Die Kunststoffschicht ist bevorzugt im LFI-Verfahren hergestellt. Relativ kurze Glasfasern werden bei diesem Verfahren in die Kunststoffschicht eingeschossen. Wenn auch die Kunststoffschicht Glasfasern enthält, werden die Wärmedehnungskoeffizienten der Kunststoffschicht und des Kunststoffkörpers sowie ggf. des Glaspaneels noch weiter einander angeglichen, so daß der Bimetalleffekt vernachlässigbar wird.

Vorzugsweise weist der Kunststoffkörper Fortsätze auf, die in die Kunststoffschicht hineinragen. Die Fortsätze können sich dabei über die gesamte Länge des Kunststoffkörpers erstrecken oder punktuell vorgesehen sein. Die Fortsätze haben Hinterschneidungen, um den Verbund zwischen der Kunststoffschicht und dem Kunststoffkörper zu erhöhen.

Die Fortsätze können bis zu einem angrenzenden Teil, z.B. einem Glaspaneel eines Deckels reichen und dienen dann als Abstandshalter zwischen dem Kunststoffkörper und dem Glaspaneel, um zu gewährleisten, daß der Zwischenraum zwischen den beiden Teilen beim Hinterschäumen gleich breit bleibt und sich der Schaum gleichmäßig im Zwischenraum verteilen kann.

Die Fortsätze erstrecken sich beispielsweise bis zur Außenseite der Kunststoffschicht und positionieren den Kunststoffkörper beim Schäumen in der Schäumform. Die aus Kunststoff bestehenden Fortsätze unterscheiden sich nach dem Ausformen des Fahrzeugkarosserieanbauteils von der die Fortsätze umgebenden Kunststoffschicht im Gegensatz zu Stahleinlegern gering und beeinträchtigen so das Aussehen der Oberfläche unwesentlich.

Vorzugsweise weist die Außenseite des Kunststoffkörpers Einbuchtungen mit Hinterschnitten auf, die die Verbindung zwischen der Kunststoffschicht und dem Kunststoffkörper ebenfalls verbessern.

Wenn wenigstens ein Hohlraum in dem Kunststoffkörper vorgesehen ist, dient dies der Gewichtsreduzierung und der Reduzierung des Schäummaterials.

Der Hohlraum ist z.B. durch Kappen verschlossen, die verhindern, daß Schäummaterial beim Aufschäumen der Kunststoffschicht in den Hohlraum eindringt.

Gemäß einer Ausführungsform ist der Kunststoffkörper ein langgestrecktes Hohlprofil. In diesem Hohlprofil verläuft z.B. eine Signalübertragungsleitung, die bei einem Fahrzeugdachpaneel eine am Fahrzeugdachpaneel angeordnete Antenne mit einer Elektronik des Fahrzeugs verbindet oder dem Antrieb des Deckels dient.

Das Fahrzeugkarosserieanbauteil ist insbesondere ein Deckel für ein Dachöffnungssystem. Dabei kann es sich bei dem Dachöffnungssystem um ein sogenanntes Schiebehebedach handeln, bei dem der Deckel beim Zurückfahren unter die feste Dachhaut bewegt wird, oder um ein sogenanntes Spoilerdach, bei dem der Deckel über die Dachhaut verschoben wird. Der Deckel wird hier u.a. als Glas- oder Solardeckel ausgebildet sein.

Der Kunststoffkörper erstreckt sich bevorzugt entlang einer Querseite oder Längsseite des Deckels, um einen Rahmenersatz zu bilden.

Vorzugsweise ist die Kunststoffschicht nur am Rand des Deckels vorgesehen, d.h. die Mitte des Deckels bleibt ohne Kunststoffhinterschäumung.

Weitere Merkmale und Vorteile der Erfindung ergeben sich aus der nachfolgenden Beschreibung und den Zeichnungen. Die Erfindung wird nachfolgend anhand von bevorzugten Ausführungsformen beschrieben. In den Zeichnungen zeigen:
- Figur 1 eine schematische Perspektivansicht eines Fahrzeugdachs mit einem erfindungsgemäßen Verbundbauteils in Form eines Fahrzeugkarosserieanbauteils, hier eines Deckels;
- Figur 2 eine vergrößerte Schnittansicht durch das erfindungsgemäße Fahrzeugkarosserieanbauteil in einer ersten Ausführungsform entlang der Linie II-II in Figur 1;
- Figur 3 eine vergrößerte Schnittansicht durch das erfindungsgemäße Fahrzeugkarosserieanbauteil in einer zweiten Ausführungsform entlang der Linie III-III in Figur 1; und
- Figur 4 eine Perspektivansicht eines erfindungsgemäßen Innenverkleidungsteils.

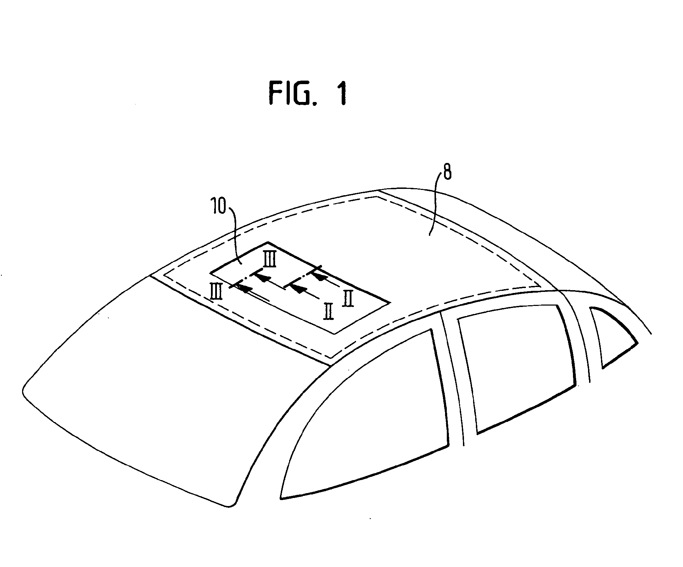

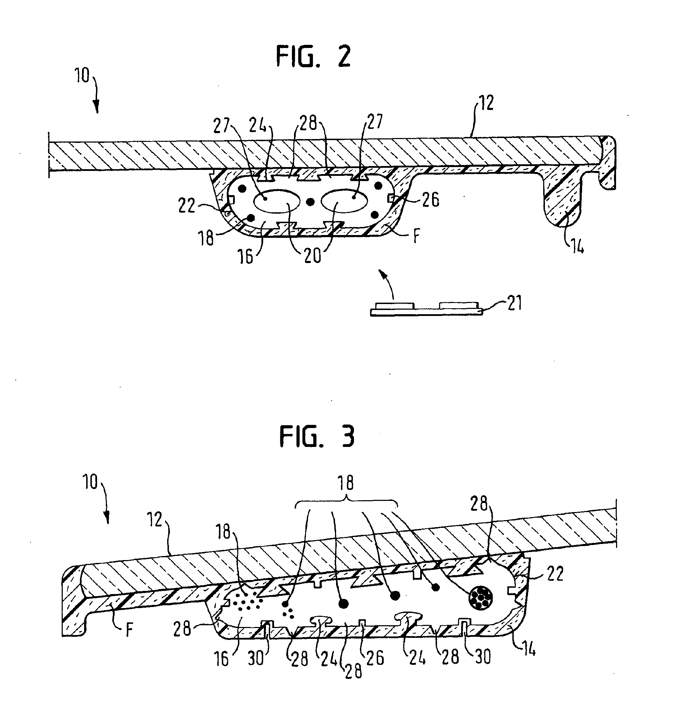

Figur 1 zeigt ein Verbundbauteil in Form eines Fahrzeugkarosserieanbauteils, genauer eines Fahrzeugdachpaneels. Bei dem Fahrzeugdachpaneel kann es sich um ein Dachmodul 8 oder einen Deckel 10 eines öffnungsfähigen Fahrzeugdaches handeln. In den Figuren 2 und 3 sind zwei Ausführungsformen des Fahrzeugdachpaneels in Form des Deckels 10 näher erläutert.

In den Figuren 2 und 3 ist der Deckel 10 ausstellbar und beweglich ausgebildet. Es kann sich dabei um ein sogenanntes Schiebehebedach handeln, bei dem der Deckel 10 beim Zurückfahren unter die feste Dachhaut bewegt wird, oder um ein sogenanntes Spoilerdach, bei dem der Deckel 10 über die Dachhaut verschoben wird.

Eine Außenhaut 12 des Deckels 10 ist von einem Glaspaneel oder einer Koextrusionsfolie gebildet. Die Koextrusionsfolie besteht aus Kunststoff oder Aluminium, ist vorzugsweise durchgefärbt und ersetzt damit eine außenseitige Lackierung. Die Außenhaut 12 ist derjenige Teil des Fahrzeugs, der von außen sichtbar ist.

Unmittelbar an die Außenhaut 12 schließt eine durch Hinterschäumen hergestellte Kunststoffschicht 14 an, die aus einem PU-Schaum besteht, wobei Glasfasern F durch das LFI-Verfahren in den Schaum eingeschossen sein können. Die Kunststoffschicht 14 verläuft wulstartig und längs des Randes des Deckels 10 geschlossen als einstückiger Rahmen um den Deckel 10 oder nur entlang der Längsränder oder Querränder.

Ein langgestreckter, extrudierter, vorgefertigter Kunststoffkörper 16, im allgemeinen (im Querschnitt gesehen) oval ausgebildet, ist in die Kunststoffschicht 14 eingebettet. Die umgebende Kunststoffschicht 14 ist dabei in allen Bereichen nahezu mit der gleichen Dicke ausgebildet, um Einfallstellen zu vermeiden und die Oberflächenqualität zu verbessern. Es stehen keine Rippen oder dergleichen nach außen vor.

Der Kunststoffkörper 16 ist aus einem Thermoplasten, insbesondere aus ABS oder Polypropylen, und mit Glasfasern 18 verstärkt. Alternativ werden Kohlefasern eingesetzt. Die Glasfasern 18 verlaufen durch den gesamten Kunststoffkörper 16 und parallel zum Rand des Deckels 10 und damit parallel zueinander. Die der Verstärkung dienenden Glasfasern 18 sind wenigstens 200 mm lang und können zu unterschiedlich dicken Strängen zusammengefaßt werden oder auch geflochten sein (siehe dickere Glasfaserbündel 18 in Fig. 3). Der Glasfaseranteil beträgt mehr als 30 Gew.-% des Kunststoffkörpers 16.

In Figur 2 sind zwei ovale Hohlräume 20 gezeigt, die den Kunststoffkörper 16, der als Hohlprofil ausgeführt ist, durchziehen. Diese Hohlräume 20 reduzieren das Eigengewicht des Kunststoffkörpers 16 und somit des gesamten Deckels 10. Die Hohlräume 20 sind durch stirnseitige Kappen 21 verschlossen, die verhindern, daß beim Schäumen der Kunststoffschicht 14 Schäummaterial in die Hohlräume 20 eindringt.

Die Kappen 21 können auch an Nuten 26 angreifen, die an einer Außenseite 22 des Kunststoffkörpers 16 vorgesehen sind (Figur 2). Die Kappen 21 gehen, wenn sie z.B. Rastfinger besitzen, mit den Nuten 26 eine Klippverbindung ein.

In dem Hohlprofil kann ein Signalübertragungsmittel 27 (Elektrokabel, Zugmittel und dergleichen) geführt werden.

In die Kunststoffschicht 16 ragen Fortsätze 28, die entweder punktuell oder über die gesamte Länge des Kunststoffkörpers 16 verlaufend vorgesehen sind. Die Fortsätze 28 können trapezförmig oder pilzförmig sein, um Hinterschneidungen 24 zu erzeugen, die den Zusammenhalt zwischen der Kunststoffschicht 14 und dem Kunststoffkörper 16 verbessern.

Im weiteren wird auf die Besonderheiten des in Figur 3 gezeigten Deckels 10 eingegangen. Figur 3 entspricht ansonsten dem in Figur 2 gezeigten Deckel 10, und es wird auf obige Ausführungen verwiesen. Für gleiche Bauteile werden dieselben Bezugszeichen verwendet.

Die in Figur 3 gezeigten Fortsätze 28 des Kunststoffkörpers 16 erstrecken sich bis zur Außenseite der Kunststoffschicht 14 und dienen der Positionierung des Kunststoffkörpers 16 in einer Schäumform.

Die Fortsätze 28 grenzen auch an das angrenzende Glaspaneel an und bilden Abstandshalter, die den Abstand zwischen dem Kunststoffkörper 16 und dem Glaspaneel beim Schäumen und Aushärten der Kunststoffschicht 14 konstant halten.

Aussparungen 30 in der in Figur 3 gezeigten Kunststoffschicht 14 setzen sich in Einbuchtungen im Kunststoffkörper 16 fort, um Einsätze für Anbauteile zu halten. An diese Einsätze werden z.B. Sonnenblenden angebracht, falls es sich bei dem Fahrzeugkarosserieanbauteil um ein Dachmodul 8 handelt.

Zumindest längs der Seitenränder, längs der die Kunststoffkörper 16 verlaufen, ist kein langgestrecktes Stahlverstärkungsprofil vorgesehen. Allenfalls Befestigungsflansche zur Anbringung des Deckels an Verfahrschlitten können in die Kunststoffschicht eingebettet sein.

Beim Herstellen des Fahrzeugkarosserieanbauteils wird in ein Schäumwerkzeug die Außenhaut 12, die von einem Glaspaneel oder einer Koextrusionsfolie gebildet ist, eingelegt. Der in einem separaten Arbeitsschritt aus Polypropylen hergestellte und mit Glasfasern 18 verstärkte Kunststoffkörper 16 wird mittels der Fortsätze 28 im Schäumwerkzeug positioniert. Flüssiges PU-Material wird in die geschlossene Form eingebracht, wobei optional Glasfasern F mit eingeschossen werden (LFI-Verfahren). Das PU-Material schäumt aus, füllt den im Schäumwerkzeug gebildeten Hohlraum aus und haftet rückseitig an der Außenhaut.

Bei einer Ausführungsform, bei der das gesamte Dachmodul mit der Kunststoffschicht vollflächig rückseitig hinterschäumt wird, sind Kunststoffkörper ebenfalls nur längs der Ränder vorgesehen, um einen Verstärkungsrahmen zu bilden, so daß diese Dachmodule, im randseitigen Schnitt gesehen, genauso aussehen wie der in den Figuren dargestellte Deckel.

Bei einem Dachmodul wird in eine offene, mit Außenhaut und Kunststoffkörper bestückte Schäumform eingeschäumt. Erst anschließend wird die Schäumform geschlossen. Auch hier sind keine langgestreckten Stahlverstärkungsprofile an den Seitenrändern vorgesehen, an denen Kunststoffkörper liegen.

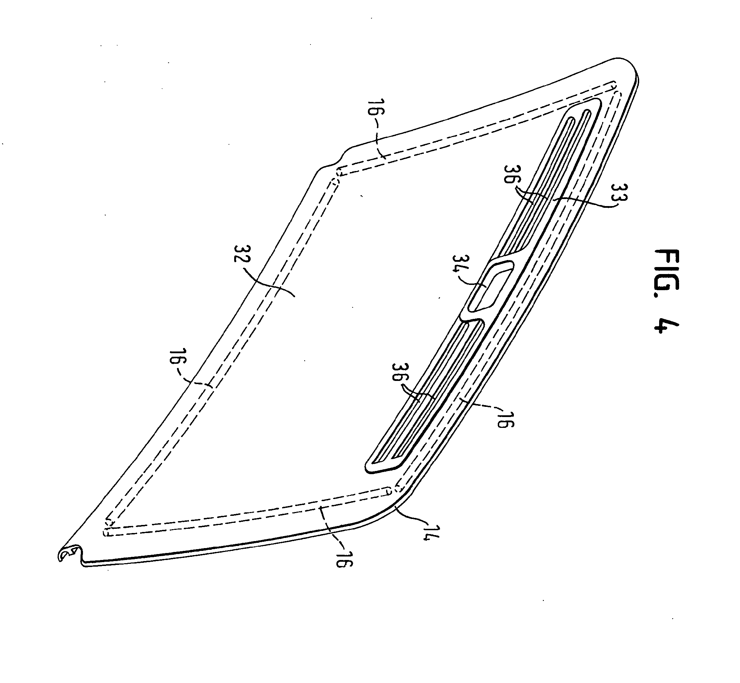

In Figur 4 ist ein Fahrzeuginnenverkleidungsteil in Form eines Schiebehimmels 32, der vor den Schiebedachdeckel verfahrbar ist, gezeigt. Dieser umfaßt eine Außenhaut 12 aus einer Folie oder einem Textil, die vollflächig rückseitig mit einer faserverstärkten Kunststoffschicht 14 (LFI-Verfahren) hinterschäumt wird. Die in die Kunststoffschicht 14 vollständig eingebetteten, faserverstärkten Kunststoffkörper 16 (gestrichelt dargestellt) bilden einen Versteifungsrahmen. Eine Lüfterleiste 33 mit Handgriff 34 und Schlitzen 36 wird in das Paneel gesteckt. Auch bei dieser Ausführungsform erstreckt sich ein verdickter, wulstartiger Abschnitt der Kunststoffschicht 14 längs des Randes. In diesem verdickten Abschnitt liegen auch die Kunststoffkörper 16.

### Bezugszeichenliste

- 8: Dachmodul
- 10: Deckel
- 12: Außenhaut
- 14: Kunststoffschicht
- 16: Kunststoffkörper
- 18: Glasfasern
- 20: Hohlraum
- 21: Kappen
- 22: Außenseite
- 24: Hinterschnitt
- 26: Nut
- 28: Fortsatz
- 30: Aussparung
- 32: Schiebehimmel
- 33: Lüfterleiste
- 34: Handgriff
- 36: Schlitze
- F: Glasfasern

## Patentansprüche

1. Verbundbauteil, insbesondere Fahrzeugpaneel, mit einer geschäumten Kunststoffschicht (14) und einem langgestreckten, extrudierten Kunststoffkörper (16), wobei der die Stabilität des Verbundbauteils erhöhende Kunststoffkörper (16) mit Fasern (18) verstärkt und wenigstens abschnittsweise in die Kunststoffschicht (14) eingebettet ist.

2. Verbundbauteil nach Anspruch 1, **dadurch gekennzeichnet, daß** das Verbundbauteil ein Fahrzeugkarosserieanbau- oder Innenverkleidungsteil ist.

3. Verbundbauteil nach Anspruch 1 oder 2, **dadurch gekennzeichnet, daß** die Fasern (F) Glasfasern oder Kohlefasern sind.

4. Verbundbauteil nach einem der vorhergehenden Ansprüche, **dadurch gekennzeichnet, daß** der Kunststoffkörper (16) vollständig in der Kunststoffschicht (14) eingebettet ist.

5. Verbundbauteil nach einem der vorhergehenden Ansprüche, **dadurch gekennzeichnet, daß** zumindest an den Seitenrändern des Verbundbauteils, längs denen ein Kunststoffkörper (16) vorgesehen ist, kein langgestrecktes Stahlverstärkungsprofil in der Kunststoffschicht (14) vorgesehen ist.

6. Verbundbauteil nach einem der vorhergehenden Ansprüche, **dadurch gekennzeichnet, daß** die Fasern (18) eine Länge von wenigstens 200 mm haben.

7. Verbundbauteil nach einem der vorhergehenden Ansprüche, **dadurch gekennzeichnet, daß** die Fasern (18) als Stränge ausgeführt sind, die sich nahezu parallel zueinander erstrecken.

8. Verbundbauteil nach einem der vorhergehenden Ansprüche, **dadurch gekennzeichnet, daß** sich die Fasern (18) im wesentlichen parallel zu einem Außenrand des Verbundbauteils erstrecken.

9. Verbundbauteil nach einem der vorhergehenden Ansprüche, **dadurch gekennzeichnet, daß** das Verbundbauteil eine Außenhaut (12), insbesondere aus Glas, aufweist, wobei die Außenhaut (12), von der Kunststoffschicht (14) hinterschäumt ist.

10. Verbundbauteil nach einem der vorhergehenden Ansprüche, **dadurch gekennzeichnet, daß** die Kunststoffschicht (14) im LFI-Verfahren hergestellt ist.

11. Verbundbauteil nach einem der vorhergehenden Ansprüche, **dadurch gekennzeichnet, daß** der Kunststoffkörper (16) Fortsätze (28) aufweist, die in die Kunststoffschicht (14) hineinragen.

12. Verbundbauteil nach Anspruch 11, **dadurch gekennzeichnet, daß** die Fortsätze (28) bis zu einem angrenzenden Teil reichen und/oder sich bis zur Außenseite der Kunststoffschicht (14) erstrecken.

13. Verbundbauteil nach einem der vorhergehenden Ansprüche, **dadurch gekennzeichnet, daß** die Außenseite (22) des Kunststoffkörpers (16) Einbuchtungen aufweist.

14. Verbundbauteil nach einem der vorhergehenden Ansprüche, **dadurch gekennzeichnet, daß** wenigstens ein Hohlraum (20) in dem Kunststoffkörper (16) vorgesehen ist.

15. Verbundbauteil nach einem der vorhergehenden Ansprüche, **dadurch gekennzeichnet, daß** der Kunststoffkörper (16) ein langgestrecktes Hohlprofil ist.

16. Verbundbauteil nach einem der vorhergehenden Ansprüche, **dadurch gekennzeichnet, daß** das Fahrzeugkarosserieanbauteil ein Deckel (10) für ein Dachöffnungssystem ist.

17. Verbundbauteil nach Anspruch 16, **dadurch gekennzeichnet, daß** sich der Kunststoffkörper (16) entlang einer Querseite oder Längsseite des Deckels (10) erstreckt.

18. Verbundbauteil nach Anspruch 16 oder 17, **dadurch gekennzeichnet, daß** die Kunststoffsschicht (14) nur am Rand des Deckels (10) vorgesehen ist.
